Europäisches Patentamt

European Patent Office

Office européen des brevets

(11) Veröffentlichungsnummer: **0 116 331**
**A2**

(12) **EUROPÄISCHE PATENTANMELDUNG**

(21) Anmeldenummer: **84100924.4**

(22) Anmeldetag: **30.01.84**

(51) Int. Cl.³: **H 02 J 7/34**
**H 01 M 10/44**

(30) Priorität: **10.02.83 DE 3304643**

(43) Veröffentlichungstag der Anmeldung:
**22.08.84 Patentblatt 84/34**

(84) Benannte Vertragsstaaten:
**AT BE CH DE FR GB IT LI LU NL SE**

(71) Anmelder: **SIEMENS AKTIENGESELLSCHAFT**
**Berlin und München Wittelsbacherplatz 2**
**D-8000 München 2(DE)**

(72) Erfinder: **Hollaus, Reinhard, Dipl.-Ing.**
**Hohenbrunner Weg 106**
**D-8028 Taufkirchen(DE)**

(72) Erfinder: **Lenauer, Herbert, Ing. grad.**
**Tucholskystrasse 24**
**D-8000 München 83(DE)**

(54) **Schaltungsanordnung zur Aufladung eines Akkumulators mit von Solarzellen geliefertem Strom.**

(57) Die Erfindung betrifft eine Schaltunsanordnung zur Aufladung eines NiCd-Akkumulators (2, 3) mit von Solarzellen (1) geliefertem Strom. Die Stromkapazität des Akkumulators (2, 3) ist derart gewählt, daß der maximale, von den Solarzellen (1) gelieferte Strom dem maximal zulässigen Dauerladestrom des Akkumulators (2, 3) entspricht. Für den Akkumulator (2, 3) werden insbesondere zwei parallelgeschaltete Akkumulatorblöcke verwendet, denen jeweils ein Vorwiderstand (4, 5) vorgeschaltet ist.

EP 0 116 331 A2

SIEMENS AKTIENGESELLSCHAFT      Unser Zeichen
Berlin und München              VPA 83 P 1 0 6 4 E

Schaltungsanordnung zur Aufladung eines Akkumulators mit
von Solarzellen geliefertem Strom

Die Erfindung betrifft eine Schaltungsanordnung zur Aufladung eines Akkumulators mit von Solarzellen geliefertem Strom.

Im DE-GM 8112568 ist eine solarstromversorgte Beleuchtungsvorrichtung beschrieben, bei der zwischen einem Akkumulator und dem eigentlichen Solarzellenmodul ein Strombegrenzer in der Form eines Ladereglers vorgesehen ist, der den Maximalstrom auf einen für den Akkumulator ungefährlichen Wert begrenzt. Wenn beispielsweise ein Solarzellenmodul aus 18 Zellen und ein NiCd-Akkumulator mit 6 V und 7 Ah verwendet werden, dann ist eine Strombegrenzung auf etwa 1,5 A erforderlich.

Durch diese Begrenzung des vom Solarzellenmodul gelieferten Stromes wird dieses schlecht ausgenutzt; außerdem sind zahlreiche Solarzellen - im oben erwähnten Beispiel 18 Solarzellen - erforderlich, damit die Ladespannung des Akkumulators, also im obigen Beispiel etwa 7,2 V erreicht werden kann.

Es ist daher Aufgabe der Erfindung, die eingangs genannte Schaltungsanordnung so zu verbessern, daß mit dieser eine optimale Ausnutzung des von den Solarzellen gelieferten Stromes ohne Strombegrenzung bzw. Laderegler erreicht wird.

Diese Aufgabe wird bei einer Schaltungsanordnung nach dem Oberbegriff des Patentanspruches 1 erfindungsgemäß da-

Kot 1 Dx / 10.02.1983

durch gelöst, daß die Stromkapazität des Akkumulators derart gewählt ist, daß der maximale, von den Solarzellen gelieferte Strom dem maximal zulässigen Dauerladestrom des Akkumulators entspricht.

Bei der Erfindung wird also die Speicherkapazität des Akkumulators nicht verändert. Dagegen wird die Stromkapazität derart gewählt, daß der maximale, von den Solarzellen gelieferte Strom dem maximal zulässigen Dauerladestrom für den Akkumulator entspricht. Beispielsweise erzeugt ein Solarzellenmodul aus 12 Zellen einen maximalen Strom (Kurzschlußstrom) von 2,2 A. Daraus folgt für den Strom $I_{10}$ (= Strom für eine zehnstündige Entladung):

Maximaler Dauerladestrom = 2 . $I_{10}$ = 2,2 A.

Wenn für den Akkumulator somit eine Stromkapazität von 11 Ah gewählt wird, dann ist keine elektronische Strombegrenzung mittels eines Ladereglers erforderlich. Ebenfalls kann eine Rückflußsperrdiode entfallen.

Bei den obigen Erläuterungen ist angenommen, daß eine Solarzelle kreisrund ist und einen Durchmesser von etwa 100 mm aufweist.

Da NiCd-Akkumulatoren mit einer Stromkapazität von 11 Ah im Handel nicht erhältlich sind, werden in vorteilhafter Weise zwei Akkumulatorblöcke mit jeweils einer Stromkapazität von 7 Ah und von 4 Ah parallelgeschaltet. Bei einer derartigen Parallelschaltung ist aber die Verteilung der Ladeströme auf die beiden Akkumulatorblöcke undefiniert, da die Spannungen an den einzelnen Akkumulatorblöcken während der Ladung und auch im vollständig geladenen Zustand stark streuen.

0116331

Dies kann durch Vorschaltung eines kleinen Widerstandes vor jedem Akkumulatorblock vermieden werden, so daß die Stromverteilung besser definierbar ist. Dieser Widerstand wird definiert durch:

$$R_S = \Delta U/I_L,$$

wobei $R_S$ der Widerstandswert des vorgeschalteten Widerstandes, $\Delta U$ der Streubereich der Akkumulatorspannung und $I_L$ der vorgesehene Teilladestrom für jeden einzelnen Akkumulatorblock bedeuten. Für den dem Akkumulatorblock mit einer Stromkapazität von 7 Ah vorgeschalteten Widerstand ist ein Widerstandswert von 0,22 Ohm vorteilhaft, während der dem Akkumulatorblock mit einer Stromkapazität von 4 Ah vorgeschaltete Widerstand einen Widerstandswert von 0,33 Ohm aufweisen kann.

Die Anzahl der Solarzellen ist derart bemessen, daß einerseits bei einer Akkumulatorspannung von 4,2 V noch der volle Strom der Solarzellen fließt, während andererseits im abgedunkelten Zustand der Solarzellen bei einer Akkumulatorspannung von 3,0 V noch keine nennenswerte Entladung des Akkumulators über die Solarzellen auftreten kann.

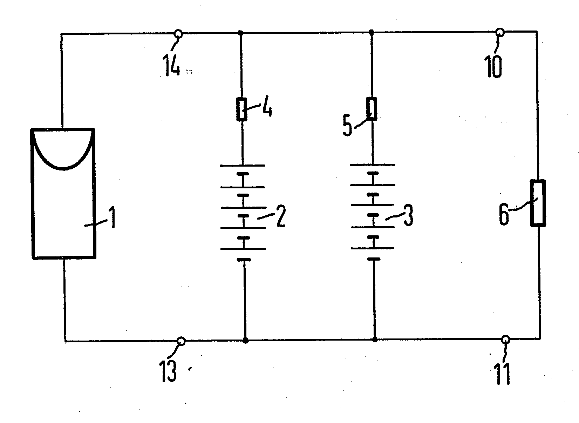

Nachfolgend wird ein Ausführungsbeispiel der Erfindung an Hand der einzigen Figur näher erläutert, in der ein Blockschaltbild der erfindungsgemäßen Schaltungsanordnung dargestellt ist.

Ein Solarzellenmodul 1 besteht aus 12 kreisrunden Solarzellen, deren jede einen Durchmesser von etwa 100 mm hat. Am Ausgang 13, 14 dieses Solarzellenmoduls 1 liegen parallel zueinander ein erster NiCd-Akkumulatorblock 2 und ein zweiter NiCd-Akkumulatorblock 3. Der Akkumulatorblock 2 hat eine Stromkapazität von 7 Ah, während der Akkumulatorblock 3 eine Stromkapazität von 4 Ah aufweist. Beide Akkumulatorblöcke 2 und 3 haben so zusammen eine Stromkapazität von 11 Ah. Jeder Akkumulatorblock 2 und 3 hat schließlich eine Nennspannung von 3,6 V.

Die Akkumulatorblöcke 2 und 3 können somit eine Energie von 40 Wh speichern.

Dem Akkumulatorblock 2 ist ein Widerstand 4 mit einem Widerstandswert von 0,22 Ohm vorgeschaltet, während dem Akkumulatorblock 3 ein Widerstand 5 mit einem Widerstandswert von 0,33 Ohm vorgeschaltet ist.

Am Ausgang 10, 11 der Schaltungsanordnung aus den Akkumulatorblöcken 2, 3 und der Widerstände 4, 5 liegt ein Verbraucher 6, der beispielsweise eine Leuchtstoffröhre mit zugeordneten Schaltungseinheiten sein kann.

5 Patentansprüche
1 Figur

Patentansprüche

1. Schaltungsanordnung zur Aufladung eines Akkumulators mit von Solarzellen geliefertem Strom, d a d u r c h g e k e n n z e i c h n e t , daß die Stromkapazität des Akkumulators (2, 3) derart gewählt ist, daß der maximale, von den Solarzellen (1) gelieferte Strom dem maximal zulässigen Dauerladestrom des Akkumulators (2, 3) entspricht.

2. Schaltungsanordnung nach Anspruch 1, d a d u r c h g e k e n n z e i c h n e t , daß bei einem von den Solarzellen (1) gelieferten Strom von etwa 2,2 A der Akkumulator (2, 3) eine Stromkapazität von 11 Ah besitzt, so daß dem Akkumulator ein Entladestrom für eine zehnstündige Entladung von 1,1 A entnehmbar ist.

3. Schaltungsanordnung nach Anspruch 1, d a d u r c h g e k e n n z e i c h n e t , daß der Akkumulator (2, 3) ein NiCd-Akkumulator ist.

4. Schaltungsanordnung nach Anspruch 2 oder 3, d a - d u r c h g e k e n n z e i c h n e t , daß der Akkumulator aus mehreren, insbesondere zwei Blöcken (2, 3) aufgebaut ist.

5. Schaltungsanordnung nach einem der Ansprüche 1 bis 4, d a d u r c h g e k e n n z e i c h n e t , daß dem Akkumulator bzw. jeden Akkumulatorblock ein Widerstand (4, 5) vorgeschaltet ist.